# EUROPÄISCHE PATENTSCHRIFT

(11) **EP 2 880 560 B1**
(45) Veröffentlichungstag und Bekanntmachung des Hinweises auf die Patenterteilung: **20.02.2019**
(21) Anmeldenummer: 13745817.0
(22) Anmeldetag: 30.07.2013
(51) Int. Cl.: G06F 17/30

(54) **VERFAHREN ZUM SYNCHRONISIEREN VON DYNAMISCHEN ATTRIBUTEN VON OBJEKTEN IN EINEM DATENBANKSYSTEM MIT EINEM ARCHIVSYSTEM**
METHOD FOR SYNCHRONISING DYNAMIC OBJECT ATTRIBUTES IN A DATABASE ARCHIVE
METHODE POUR SYNCHRONISER ATTRIBUTS DYNAMIQUES D'OBJECTS D'UNE SYSTEME D'ARCHIVAGE DES BASES DES DONNEES

(30) Priorität: 01.08.2012 DE 102012107031
(43) Veröffentlichungstag der Anmeldung: 10.06.2015
(73) Patentinhaber: Artec Computer GmbH, 61184 Karben (DE)
(72) Erfinder: ARTISHDAD, Jerry John, 61184 Karben (DE); HETT, Christian, 61194 Niddatal (DE); ARTISHDAD, Nils, 61184 Karben (DE)
(74) Vertreter: Meyer-Dulheuer, Karl-Hermann
(86) Internationale Anmeldenummer: PCT/EP2013/066027
(87) Internationale Veröffentlichungsnummer: WO 2014/020036

(56) Entgegenhaltungen:
- US-A1- 2011 153 836
- BOSE J ET AL: "Using Moving Object Databases to Provide Context Information in Mobile Ad-hoc Networks", MOBILE DATA MANAGEMENT, 2006. MDM 2006. 7TH INTERNATIONAL CONFERENCE O N NARA, JAPAN 10-12 MAY 2006, PISCATAWAY, NJ, USA,IEEE, 10. Mai 2006 (2006-05-10), Seiten 75-75, XP010917949, DOI: 10.1109/MDM.2006.164 ISBN: 978-0-7695-2526-6

## Beschreibung

Die vorliegende Erfindung befasst sich mit einem Verfahren, welches zum Synchronisieren von dynamischen Attributen von Objekten in einem Datenbanksystem mit einem Archivsystem verwendet wird. Insbesondere soll hier die Möglichkeit geschaffen werden, auch Datenbanksysteme bei denen keine Synchronisierung vorgesehen ist, entsprechend mit diesem Verfahren zu synchronisieren.
Grundsätzlich ist es bei einem Datenbanksystem sinnvoll, dieses Datenbanksystem - sei es zu Backupzwecken oder Archivzwecken - beispielsweise in einem Archivsystem zu sichern. Gerade bei Archivzwecken kommt für die Datenbankobjekte zusätzlich die Anforderung hinzu, diese gegen Veränderung zu schützen, was üblicherweise durch eine Signatur erreicht wird. Dadurch ergeben sich für die Synchronisierung besondere Schwierigkeiten, wenn die dynamischen Objektattribute, die vom Benutzer der Datenbank geändert werden können, mit dem Archivsystem synchronisiert werden sollen. Ein besonders ausgeprägtes Beispiel dieser Art stellen Datenbanksysteme zum Verwalten von Emails dar.
Allgemein sind bereits Datenbanksysteme bekannt, welche derart ausgestaltetet sind, dass diese mit einem entsprechend dafür entworfenen Archivsystem synchronisiert werden können. Diese Datenbanksysteme und das dazugehörige Archivsystem sind aber stark auf ihre jeweilige Funktion und Struktur beschränkt. In der Regel wird dabei eine einfache Kopie der Datenbankdateien (oder Teilen davon) angelegt, welche nicht gegen Veränderung geschützt ist. Ebenso kann es beispielsweise vorkommen, dass das Datenbanksystem überhaupt keine geeigneten Schnittstellen bietet oder der jeweilige Benutzer diese Schnittstellen aus irgendwelchen Gründen nicht benutzen will oder kann.

US 2011/153836 A1 offenbart ein System, bei dem zusätzliche dynamische Attribute zur Steuerung von Datensätzen erzeugt werden.

Die Aufgabe der vorliegenden Erfindung war es daher, ein Verfahren der Synchronisierung von dynamischen Objektattributen zu etablieren, welches es ermöglicht, ein Datenbanksystem mit einem Archivsystem so zu synchronisieren, dass eine Synchronisierung auch ohne vorgesehene Schnittstelle oder alternativ hierzu erfolgen kann.

Gelöst wird diese Aufgabe mithilfe eines Verfahrens zum Synchronisieren von dynamischen Attributen von Objekten in einem Datenbanksystem mit einem Archivsystem mithilfe von einem zusätzlichen dynamischen Attribut oder je einem zusätzlichen dynamischen Attribut pro zu synchronisierendem Attribut beinhaltend zumindest folgende Schritte:
- Bei erstmaliger Anwendung Definieren von einem oder mehreren zusätzlichen dynamischen Objektattributen im Datenbanksystem durch das Archivsystem, sofern das Datenbanksystem diese nicht automatisch bei der ersten Wertzuweisung erstellt,
- Abfrage aller in dem Datenbanksystem befindlichen Objekte, bei denen der Wert / die Werte der einen oder mehreren zusätzlichen dynamischen Objektattribute leer ist / sind oder nicht mit dem Wert oder einem davon abgeleitetem Wert des korrespondierenden Objektattributs im Datenbanksystem übereinstimmt,
- Suchen und Finden der abgefragten Objekte im Archivsystem,
- Übernehmen der Objektattribute aus dem Datenbanksystem in das Archivsystem,
- Markieren des verarbeiteten Abfrageergebnisses im Datenbanksystem, indem der Wert der Objektattribute so wie er von der Abfrage zurückgegeben wurde oder ein davon abgeleiteter Wert in das jeweils korrespondierende zusätzliche dynamische Objektattribut des Datenbanksystems geschrieben wird.

Im Sinne dieser Anmeldung ist für die Synchronisierung unter einem Archivsystem nicht nur ein reines Archivsystem im engeren Sinne zu verstehen, sondern beispielsweise auch mobile Clients oder räumlich getrennte Backupsysteme. Demzufolge sollte die Synchronisierung auch möglichst bandbreitenschonend ausgelegt sein.

Viele Datenbanksysteme bieten die Möglichkeit, die Datenbankobjekte um zusätzliche dynamische Attribute zu erweitern, und verfügen normalerweise alle über eine Abfragemöglichkeit. Diese zwei Merkmale macht sich die vorliegende Erfindung zu Nutze.

Bei der ersten Anwendung des Verfahrens zum Synchronisieren von dynamischen Attributen in einem Datenbanksystem mit einem Archivsystem müssen die erfindungsgemäßen zusätzlichen dynamischen Objektattribute zunächst im Datenbanksystem definiert werden. Bei der Verwendung von klassischen Datenbanken muss explizit vorher festgelegt werden, welche Attribute für eine Wertzuweisung überhaupt in Frage kommen bzw. überhaupt existieren. Dieses Problem stellt sich bei "modernen NoSQL" Datenbanken hingegen nicht, da es diese Datenbanken erlauben, dass jedem Objekt ein beliebiges Attribut zugewiesen werden kann, ohne dass dies vorher festgelegt werden muss. Das neue Attribut wird bei der ersten Zuweisung von der Datenbank automatisch erstellt und für die gesamte Datenbank definiert. Daher kann bei dieser Art von Datenbanken auf den initialisierenden ersten Schritt des erfindungsgemäßen Verfahrens verzichtet werden.

Mittels dieser zusätzlichen dynamischen Objektattribute wird das Archivsystem in die Lage versetzt, Änderungen an den überwachten Objektattributen, die nicht zwangsläufig alle den Objekten zugewiesenen Attribute umfassen müssen, zu erkennen und in der Folge zu synchronisieren. Für den Fall, dass mehrere Objektattribute synchronisiert werden sollen, bestehen hierbei zwei Möglichkeiten.

Einerseits kann ein einzelnes zusätzliches dynamisches Objektattribut definiert werden, dem als Wert ein von den zu synchronisierenden Objektattributen abgeleiteter Wert zugewiesen wird. Je nach Art der Attribute kann die Ableitung im einfachsten Fall in einer Verkettung der Attribute bestehen. Bei einer vorzugsweisen Ausgestaltung handelt es sich bei der Ableitung um eine Hashfunktion, welche eine besonders effektive Abfrage erlaubt. Ändert sich zumindest eines der zu synchronisierenden Objektattribute, wird der Vergleich der in gleicher Weise abgeleiteten Objektattributwerte mit dem zusätzlichen dynamischen Objektattribut dies anzeigen. Man kann dann zwar nicht sagen, welches oder welche Objektattribute sich geändert haben, kann aber dann einfach die Werte für sämtliche zu synchronisierenden Objektattribute in das Archivsystem übernehmen. Da die Attribute im Verhältnis zu den Objekten sehr klein sind, erfordert dies nur eine geringe Bandbreite bei gegenüber einer Einzelüberwachung verringertem Aufwand für die Berechnung der Ableitungen der Werte und der geringeren Anzahl an Datenbankabfragen. Insofern eignet sich diese Methode besonders für Datenbankobjekte, bei denen im Synchronisierungsintervall häufig mehrere Attribute gleichzeitig geändert werden.

Die zweite Möglichkeit besteht in der Verwendung je eines zusätzlichen dynamischen Objektattributs pro zu synchronisierendem Objektattribut. Hierbei brauchen dann jeweils nur gezielt die geänderten Objektattribute zu synchronisiert werden, was vorteilhaft ist bei Datenbankobjekten, bei denen im Synchronisierungsintervall in der Regel nur ein Attribut oder zumindest ein im Verhältnis zur Gesamtzahl der überwachten Attribute geringer Anteil der Attribute geändert wird. Im einfachsten Fall wird in dem zusätzlichen dynamischen Objektattribut jeweils eine Kopie des Werts des korrespondierenden zu synchronisierenden Attributs abgelegt. Vorteilhaft ist auch hierbei eine Variante, bei der nicht der Wert direkt dort abgelegt wird, sondern das Ergebnis einer Hashfunktion über diesen. Die Abfrage erfolgt dann analog wieder mit dem Hashwert des zu synchronisierenden Attributs im Vergleich zu dem zusätzlichen dynamischen Objektattribut.

Es folgt nach diesem gegebenenfalls notwendigen vorbereitenden Schritt als erster eigentlicher Verfahrensschritt zur Synchronisierung eine Abfrage all jener Objekte, die sich in dem Datenbanksystem befinden und deren Werte der zusätzlichen dynamischen Objektattribute leer sind oder nicht mit den Werten des korrespondierenden zu synchronisierenden Objektattributes im Datenbanksystem übereinstimmen. Hierbei ist es vorteilhaft, wenn diese Abfrage vom Archivsystem in Datenblöcke mit einer variablen Größe aufgeteilt wird. Auf diese Weise kann das Archivsystem zunächst die Antwort auf z. B. 1000 Treffer abarbeiten, bevor ein neuer Block angefordert wird. Außerdem werden gegebenenfalls im Datenbanksystem bestehende Drosselungsmechanismen oder Sperren gegen zu große oder zu lange dauernden Abfragen auf diese Weise nicht ausgelöst.

Die durch die Abfrage als geändert erkannten Objektattribute werden dann in das Archivsystem übernommen, indem zunächst die betroffenen Objekte im Archivsystem gesucht werden und dann deren Attribute durch die Datenbankobjektattribute aus der Abfrage ersetzt werden. Hierbei ist es besonders vorteilhaft, wenn das Archivsystem dabei auf eindeutige Bezeichner zurückgreifen kann.

Sollten die Objekte noch nicht in dem Archivsystem enthalten sein, was daran erkennbar ist, dass dessen zusätzliche dynamischen Objektattribute in dem Datenbanksystem noch leer sind oder daran erkennbar ist, dass die Objekte im Archivsystem an Hand eines eindeutigen Bezeichners nicht gefunden wurden, kann das erfindungsgemäße Synchronisierungsverfahren vorteilhaft dahingehend erweitert werden, dass die bei der Abfrage gefundenen Objekte gleich inklusive ihrer Attribute vom Datenbanksystem in das Archivsystem geschrieben werden. Auf diese Weise lässt sich der Archivierungsvorgang mit dem Synchronisierungsvorgang der Objektattribute verbinden und in einem Durchlauf abarbeiten. Gegebenenfalls lassen sich so auch einem normalen Archivierungsvorgang eventuell entgangene Objekte noch nachträglich erfassen und in das Archivsystem aufnehmen.

Um bereits verarbeitete Abfrageergebnisse bei der Suche nicht noch einmal zu finden, werden diese schließlich im Datenbanksystem markiert. Dies geschieht so, dass - je nach verwendeter Verfahrensvariante - der von der Abfrage gelieferte Wert des Objektattributes bzw. der davon abgeleitete Wert oder der von mehreren Objektattributen abgeleitete Wert in das jeweils entsprechende zusätzliche dynamische Objektattribut des Datenbanksystems geschrieben wird. Eine erneute Abfrage des Datenbanksystems mit den gleichen Kriterien gibt somit erst dann wieder einen Treffer zurück, wenn mindestens ein Objektattribut verändert wurde. Falls die Abfrage auf z. B. 1000 Elemente beschränkt wurde, gibt die Abfrage weitere zu synchronisierende Objekte zurück, nicht aber die eben als bearbeitet markierten.

Wichtig ist beim Markieren, dass das Archivsystem die Werte aus der Abfrageantwort für die Wertzuweisung an die zusätzlichen dynamischen Objektattribute verwendet und nicht eine Kopie des korrespondierenden Objektattributwertes in dem Datenbanksystem benutzt. Dadurch lassen sich sogenannte "race conditions" beheben, die auftreten, wenn das fragliche Objektattribut unmittelbar nach der Abfrage und noch vor Setzen des zusätzlichen Objektattributwertes geändert wird. Würde hier der (jetzt schon wieder neue) Wert einfach innerhalb des Datenbanksystems kopiert werden, stünde im Archivsystem nur der zwischenzeitliche Wert. Eine neue Abfrage würde jedoch das Objektattribut nicht als geändert erkennen, da der Vergleich mit dem kopierten neuen Wert erfolgen würde. Dagegen wird durch die Verwendung des Wertes aus der Abfrage die Änderung bei einer neuen Abfrage erkannt und das Archivsystem demgemäß abgeglichen.

Ein wesentlicher Aspekt für das erfindungsgemäße Verfahren ist die Tatsache, dass die hauptsächliche Rechenleistung hierbei durch das Datenbanksystem vorgenommen wird. Das Archivsystem sendet bzw. empfängt nur kleine Datenpakete mit Abfragen an bzw. Antworten vom Datenbanksystem, was das Verfahren besonders geeignet für den Einsatz zwischen räumlich getrennten Systemen macht. Zudem sind die Datenbanksysteme in der Regel mit effizienten Abfragefunktionen ausgestattet und verfügen oftmals über fortgeschrittene Caching- und Indextechniken, so dass diese solche Arbeiten wesentlich besser erledigen können als ein externes Archivsystem, welches im Gegenzug einfacher aufgebaut und ausgestattet werden kann und das Datenbanksystem auch nicht mit dem ineffizienten wiederholten Auflisten aller Objekte belasten muss.

In einer weiteren Ausgestaltungsvariante des erfindungsgemäßen Verfahrens handelt es sich bei den zu synchronisierenden Objektattributen um Ordnernamen oder vollständige Ordnerpfade. In diesem Fall findet bevorzugt eine abgewandelte Form des erfindungsgemäßen Verfahrens Anwendung, vorausgesetzt, das Datenbanksystem bietet eine Abfragemöglichkeit nach den im System vorhandenen Ordnern. Dabei werden die Objekte ordnerweise abgearbeitet indem das Archivsystem zunächst vom Datenbanksystem eine Auflistung der Ordner abfragt und jeweils den Hashwert aus dem vollständigen Ordnerpfad berechnet. Anschließend fragt es für die Synchronisierung jeweils alle Objekte der Ordner des Datenbanksystems ab bei denen das zusätzliche dynamische Objektattribut leer ist oder nicht mit dem für diesen Ordner errechneten Hashwert übereinstimmt. Nach Synchronisierung des Objektattributs markiert es die abgearbeiteten Abfrageergebnisse durch Schreiben des errechneten Hashwerts in das zusätzliche dynamische Objektattribut.

Diese Vorgehensweise bietet einen erheblichen Vorteil, weil innerhalb eines Ordners der Hashwert des zu prüfenden Attributs konstant ist und somit nur einmal vom Archivsystem berechnet werden muss und innerhalb der Anfrage, die an das Datenbanksystem gesendet wird konstant ist. Unter Umständen erlaubt die Abfragesprache des Datenbanksystems keine Abfragen mit Bedingungen die komplexe Berechnungen wie das Bilden eines Hashwertes eines Objektattributes enthalten, sondern nur einfache Vergleiche mit konstanten Werten. Durch dieses Vorgehen kann auch bei diesem Spezialfall eine Synchronisierung nach dem erfindungsgemäßen Verfahren verfolgen oder ein besonders effizienter Index oder Cache des Datenbanksystems verwendet werden.

Weiterhin kann die für die Objektattributverarbeitung verwendete Hashfunktion vorteilhaft zusätzliche Informationen wie Seriennummern, Token, Geheimnisse, usw. beinhalten, wobei das Geheimnis ein beliebiger Wert sein kann, der im Programmcode des Archivsystems enthalten ist. Die Verknüpfung des Objektattributs mit einem oder mehreren der genannten Informationen vor der Hashwertberechnung bildet ein Sicherheitsmerkmal für die Archivsystemfunktion.

Durch die Verknüpfung ist es für einen Anwender des Datenbanksystems nicht mehr mit relativ einfachen Mitteln möglich, aus dem ihm bekannten Wert des Objektattributs auf den als Markierung verwendeten Inhalt des ihm möglicherweise ebenfalls bekannt gewordenen zusätzlichen dynamischen Objektattributs zu schließen. Somit kann er seine Datensätze nicht durch gezieltes Manipulieren des zusätzlichen dynamischen Objektattributs der Synchronisierung oder der nachträglichen Objekterfassung entziehen.

Ferner kann die Hashfunktion auch noch um beliebig gewählte Zeichenfolgen erweitert werden. Dieses sogenannte Salt kann beispielsweise das Tagesdatum am Tag der Installation des Systems sein. Diese Erweiterung des zu hashenden Wertes bietet die Möglichkeit, durch Ändern nur eines Wertes eine komplette Neusynchronisierung des Datenbanksystems auszulösen. Ist diese Funktion im Archivsystem vorgesehen, braucht der Benutzer nur den Wert, der das Salt bildet, zu ändern, damit der Hashwert sich von den zuvor benutzten unterscheidet - selbst bei unveränderten zu synchronisierenden Objektattributwerten. Somit erkennt die Abfrage sämtliche überwachten Objektattribute als geändert und das Archivsystem synchronisiert sie demnach neu. Diese hocheffiziente Technik erfordert keinerlei Änderungen an den Werten in dem Datenbanksystem und schon gar nicht an mehreren oder gar allen Objektattributen, sondern lediglich eine einzige Änderung eines Wertes im Archivsystem.

Um die vom Datenbanksystem an das Archivsystem übermittelten Objekte gegen Veränderung zu schützen, werden die empfangenen Objekte beim Eingang im Archivsystem von diesem vorzugsweise mit einer Signatur versehen oder von einem Zeitstempeldienst signieren gelassen. Die Attribute der empfangenen Objekte sind allerdings von der Signierung ausgenommen. Dadurch können Datenbankobjekte, auf deren Integrität es ankommt, gegen Änderungen geschützt werden und dennoch gleichzeitig die dynamischen Objektattribute auf dem aktuellen Stand des Datenbanksystems gehalten werden.

Haben gleich zwei oder mehrere Archivsysteme Zugriff auf das Datenbanksystem, werden die zusätzlichen dynamischen Objektattribute bevorzugt jeweils mit einem Bezeichner versehen, welcher Identifikationseigenschaften des Archivsystems beinhaltet. Dies können beispielsweise die Seriennummern, MAC Adressen, eindeutige Gerätebezeichnungen und dergleichen sein. Dadurch verfügt jedes Archivsystem über einen eigenen Indikator für die Synchronisierung, so dass die Systeme sich diesen nicht gegenseitig überschreiben und unabhängig voneinander arbeiten können. Insbesondere wird für den Fall, dass in das zusätzliche dynamische Objektattribut ein Identifikationsmerkmal des Archivsystems eingeht, verhindert, dass zwei Systeme ein dynamisches Attribut bei jedem Durchlauf gegenseitig überschreiben und somit Objekte bei jedem Durchlauf erneut synchronisiert werden. Für den Fall, dass weder in das zusätzliche dynamische Objektattribut, noch in dessen Bezeichner ein Identifikationsmerkmal des Archivsystems eingeht, würde in der Regel eine Änderung nur von einem Archivsystem bemerkt und synchronisiert werden.

Das Datenbanksystem verfügt vorzugsweise über jeweils ein zugangsgeschütztes Benutzerkonto pro Benutzer, auf welche separat zugegriffen werden kann. Somit kann die Synchronisierung jeweils getrennt für die einzelnen Benutzer durchgeführt werden. Das Archivsystem selbst verfügt ferner bevorzugt über ein zugangsgeschütztes Administrationskonto bzw. eine besondere Vertrauensstellung, was ihm einen Zugriff auf alle Benutzerkonten des Datenbanksystems ermöglicht. Somit wird vermieden, dass für sämtliche Benutzerkonten Zugangsdaten mit dem Datenbanksystem ausgetauscht oder im Archivsystem hinterlegt werden müssen.

Um den Zugriff auf bestimmte Konten beschränken zu können, bzw. um Abfrageparameter bestimmen zu können, ist es zweckmäßig, wenn das Archivsystem einen Verzeichnisdienst wie beispielsweise LDAP verwendet, um eine Liste der Benutzerkonten zu erfragen, deren Objekte synchronisiert werden sollen.

Eine weitere Option des erfindungsgemäßen Verfahrens ist, dass das Archivsystem basierend auf einem definierten Regelwerk in Abhängigkeit von dem Wert der synchronisierten Objektattribute weitere Aktionen auf dem Archivsystem und/oder dem Datenbanksystem durchführt. So können anderweitig nicht vorgesehene oder mögliche Funktionsauslösungen realisiert werden, bei denen der Benutzer des Datenbanksystems beispielsweise durch Setzen eines bestimmten, in dem auf dem Archivsystem hinterlegten Regelwerk definierten Wertes eines der überwachten dynamischen Objektattribute eine gewünschte Mindestaufbewahrungszeit des Objekts im Archivsystem einstellen oder eine sofortige Löschung bewirken kann. Ebenso lassen sich so beispielsweise besondere Speicherorte oder -arten definieren oder diverse Reportfunktionen implementieren.

Eine besonders bevorzugte Ausgestaltungsform des erfindungsgemäßen Verfahrens sieht vor, dass es zur Synchronisierung eines Emailarchivs verwendet wird und es sich demnach bei den Objekten, deren dynamische Attribute synchronisiert werden, um Emails handelt. In diesem Fall findet als eindeutiger Bezeichner zum Finden der Objekte im Archivsystem bevorzugt die weltweit eindeutig vergebene Message-ID Verwendung. Dies bietet den Vorteil, die Objekte unabhängig von der Art, wie sie in das Archivsystem übernommen werden (z. B. Journaling-Funktion, direkter Mailserverzugriff, Mitschnitt des Netzwerkverkehrs, Import von Altdaten oder alten Archiven o. ä.), immer eindeutig dem Abfrageergebnis zugeordnet werden können.

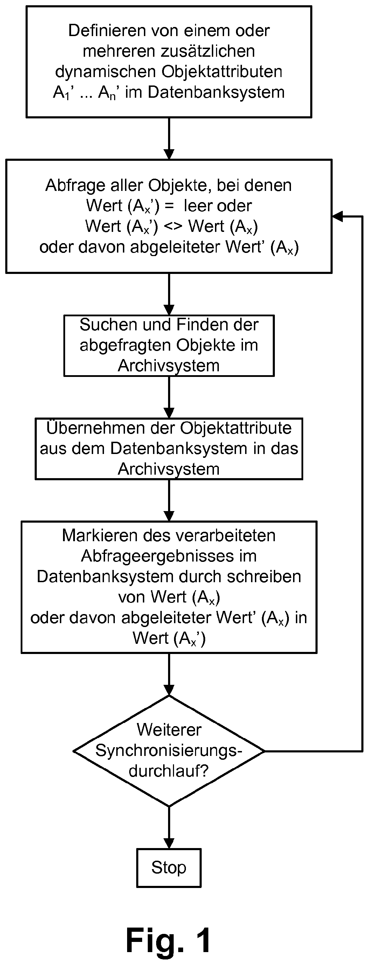

Figur 1 verdeutlicht die Funktionsweise des beanspruchten Verfahrens, welches zu Beginn des Verfahrens eines oder mehrere zusätzliche dynamische Objektattribute A₁'... Aₙ' in einem Datenbanksystem definiert, sofern dies für das Datenbanksystem explizit vorab erforderlich ist. Im nächsten Schritt der Figur 1 erfolgt eine Abfrage aller Objekte, bei denen der Wert von Aₓ' entweder leer ist oder vom Wert von Aₓ oder einem davon abgeleiteten Wert' von Aₓ verschieden. Nachdem die abgefragten Objekte im Archivsystem gesucht und gefunden wurden, werden die Objektattribute aus der Datenbank in das Archivsystem übernommen. Im nächsten Schritt werden die verarbeiteten Abfrageergebnisse im Datenbanksystem markiert, indem der Wert von Aₓ oder der davon abgeleitete Wert' Aₓ in den Wert Aₓ' geschrieben wird. Der Synchronisierungsvorgang ist damit abgeschlossen und kann gegebenenfalls wiederholt werden.

Bei dem folgenden Ausführungsbeispiel handelt es sich bei dem Datenbanksystem um ein Mailsystem wie z. B. Microsoft® Exchange und bei dem Archivsystem um eine Emailarchivierungslösung. Gezeigt wird eine mögliche, vereinfachte Kommunikation zwischen dem Archivsystem und dem Datenbanksystem über das Netzwerkprotokoll SOAP. Dieses Ausführungsbeispiel soll erläutern, wie die Ordner bei einer Abfrage aufgelistet werden bzw. wie im jeweiligen Ordner nach den relevanten Objekten gesucht wird. Darüber hinaus wird in diesem Ausführungsbeispiel auch gezeigt, wie die Markierung der einzelnen Objekte von Statten geht, so dass diese in einer weiteren Abfrage nicht mehr gefunden werden.

Zum Auflisten der Ordner sendet das Archivsystem folgende Abfrage an das Datenbanksystem:

```
 <?xml version="1.0" encoding="utf-8"?>
 <soap:Envelope>
  <soap:Body>
    <FindFolder Traversal="Deep">
      <FolderShape>
        <t:BaseShape>IdOnly</t:BaseShape>
        <t:AdditionalProperties>
          <t:FieldURI FieldURI="folder:DisplayName" />
          <t:FieldURI FieldURI="folder:ParentFolderId" />
        </t:AdditionalProperties>
      </FolderShape>
      <IndexedPageFolderView MaxEntriesReturned="1000" Offset="0"
 BasePoint="Beginning" />
      <ParentFolderIds>
        <t:DistinguishedFolderId Id="msgfolderroot" />
      </ParentFolderIds>
    </FindFolder>
  </soap:Body>
  </soap:Envelope>
```

Die mögliche Antwort auf die beispielhafte Auflistungsabfrage sieht folgendermaßen aus:

```
 <?xml version="1.0" encoding="utf-8"?>
 <s:Envelope>
  <s:Body>
    <m:FindFolderResponse>
      <m:ResponseMessages>
        <m:FindFolderResponseMessage ResponseClass="Success">
          <m:ResponseCode>NoError</m:ResponseCode>
          <m:RootFolder IndexedPagingOffset="19" TotalItemsInView="19"
 IncludesLastItemInRange="true">
            <t:Folders>
              <t:Folder>
                <t:FolderId
 Id="AAMkcmub9yM99OhQbRGdoWQ1zw0AAAZufe0AAA="/>
                <t:ParentFolderId
 Id="AAMkADRmOhQbRGdoWQ1zw0AAAZufeoAAA=" ChangeKey="AQAAAA=="/>
                <t:DisplayName>Quartal 4</t:DisplayName>
              </t:Folder>
              <t:Folder>
                <t:FolderId Id="AAMkADRmfe2AAA="/>
                <t:ParentFolderId
 Id="AAMkcmub9yM99OhQbRGdoWQ1zw0AAAZufe0AAA ="/>
                <t:DisplayName>FirmaXYZ</t:DisplayName>
              </t:Folder>
            </t:Folders>
          </m:RootFolder>
        </m:FindFolderResponseMessage>
      </m:ResponseMessages>
    </m:FindFolderResponse>
  </s:Body>
 </s:Envelope>
```

Als Nächstes erfolgt das Auflisten von maximal 500 zu synchronisierenden Objekte im Ordner "FirmaXYZ" mit der Ordner-ID "AAMkADRmfe2AAA=". Für die Auflistung wird nach den relevanten Objekten gesucht, wobei hier die Message-ID abgefragt wird, da diese weltweit eindeutig ist und von einem Archivsystem per Journaling archiviert und wiedergefunden werden kann. In diesem Beispiel setzt sich der Attributbezeichner in Form einer GUID aus dem konstanten Teil "B29C11 BF-46C7-4AB6-BDF6-2545016" und der Seriennummer des Archivsystems "54183" zusammen. Die Abfrage ermittelt, ob dieser existent ist bzw. den richtigen Wert hat. Der gesuchte Wert "1242656501" wird aus einem Hashwert aus einer Verknüpfung des Ordners mit der Seriennummer und einem geheimen Wert errechnet, der auf die Größe einer Variablen vom Typ Long gekürzt wird.

```
 <?xml version="1.0" encoding="utf-8"?>
 <soap:Envelope>
  <soap:Body>
    <FindItem Traversal="Shallow">
      <ItemShape>
        <t:BaseShape>IdOnly</t:BaseShape>
        <t:AdditionalProperties>
          <t:FieldURI FieldURI="message:InternetMessageId" />
        </t:AdditionalProperties>
      </ItemShape>
      <IndexedPageItemView MaxEntriesReturned="500" Offset="0"
      BasePoint="Beginning" />
      <Restriction>
        <t:And>
          <t:Exists>
            <t:FieldURI FieldURI="message:InternetMessageId" />
          </t:Exists>
          <t:Or>
            <t:Not>
              <t:Exists>
                <t:ExtendedFieldURI PropertySetId="B29C11BF-46C7-4AB6-BDF6-
                254501654183" PropertyName="EWS Folder Sync Mark 54183" PropertyType="Long"
                />
              </t:Exists>
            </t:Not>
            <t:IsNotEqualTo>
              <t:ExtendedFieldURI PropertySetId="B29C11BF-46C7-4AB6-BDF6-
              254501654183" PropertyName="EWS Folder Sync Mark 54183" PropertyType="Long"
              />
              <t:FieldURIOrConstant>
                <t:Constant Value="1242656501" />
              </t:FieldURIOrConstant>
            </t:IsNotEqualTo>
          </t:Or>
        </t:And>
      </Restriction>
      <ParentFolderIds>
        <t:FolderId Id="AAMkADRmfe2AAA=" />
      </ParentFolderIds>
    </FindItem>
  </soap:Body>
  </soap:Envelope>
```

In der folgenden beispielhaften Antwort wird ein Erfolg der Suche ausgegeben. Es wurde ein zu synchronisierendes Objekt gefunden und die Suche muss nicht sofort wiederholt werden, d.h. es waren weniger als 500 Ergebnisse. Die beim Absenden der Email vergebene Message-ID "44306E02B9BA297B @example.de" des zu synchronisierendes Objekt, mit deren Hilfe die Email im Archivsystem gefunden werden kann, wird ebenfalls zurückgegeben:

```
 <?xml version="1.0" encoding="utf-8"?>
 <s:Envelope>
 <s:Body>
  <m:FindItemResponse>
    <m:ResponseMessages>
      <m:FindItemResponseMessage ResponseClass="Success">
        <m:ResponseCode>NoError</m:ResponseCode>
        <m:RootFolder IndexedPagingOffset="1" TotalItemsInView="1"
 IncludesLastItemInRange="true">
          <t: Items>
            <t:Message>
              <t:ItemId Id="AAMkADRmYAAAZuffhAAA=" ChangeKey=" CQAAAufnh"/>
              <t:ExtendedProperty>
                <t:ExtendedFieldURI PropertyTag="0x75"
 PropertyType="String"/>
                <t:Value>EX</t:Value>
              </t:ExtendedProperty>
              <t:InternetMessageId>&ltj44306E02B9BA297B@example.de></t:InternetMessageId>
            </t:Message>
          </t: Items>
        </m:RootFolder>
      </m:FindItemResponseMessage>
    </m:ResponseMessages>
  </m:FindItemResponse>
  </s:Body>
  </s:Envelope>
```

Zum Markieren des gefundenen Objekts als erledigt, damit dieses nicht mehr in einer weiteren Suchabfrage gefunden werden kann, sendet das Archivsystem an das Datenbanksystem folgende Anfrage:

```
 <?xml version="1.0" encoding="utf-8"?>
 <soap:Envelope>
  <soap:Body>
    <UpdateItem ConflictResolution="AlwaysOverwrite"
    MessageDisposition="SaveOnly">
      <ItemChanges>
        <t:ItemChange>
          <t:ItemId Id="AAMkADRmYAAAZuffhAAA=" ChangeKey="CQAAAufnh" />
          <t:Updates>
            <t:SetItemField>
              <t:ExtendedFieldURI PropertySetId="B29C11BF-46C7-4AB6-BDF6-
              254501654183" PropertyName="EWS Folder Sync Mark 54183"
              PropertyType="Long" />
              <t:Value>1242656501</t:Value>
            </t:SetItemField>
          </t:Updates>
        </t:ItemChange>
      </ItemChanges>
    </UpdateItem>
  </soap:Body>
  </soap:Envelope>
```

Ein Erfolg wird vom Datenbanksystem mit folgender Antwort bestätigt:

```
 <?xml version="1.0" encoding="utf-8"?>
 <s:Envelope>
  <s:Body>
    <m:UpdateItemResponse>
      <m:ResponseMessages>
        <m:UpdateItemResponseMessage ResponseClass="Success">
          <m:ResponseCode>NoError</m:ResponseCode>
          <m:Items>
            <t:Message>
              <t:ItemId Id="AAMkADRmYAAAZuffhAAA=" ChangeKey="CQAAAufnr"/>
            </t:Message>
          </m:Items>
        </m:UpdateItemResponseMessage>
      </m:ResponseMessages>
    </m:UpdateItemResponse>
  </s:Body>
  </s:Envelope>
```

## Patentansprüche

1. Verfahren zum Synchronisieren von dynamischen Attributen von Objekten in einem Datenbanksystem mit einem Archivsystem mithilfe von einem zusätzlichen dynamischen Attribut oder je einem zusätzlichen dynamischen Attribut pro zu synchronisierendem Attribut beinhaltend zumindest folgende Schritte:
• Bei erstmaliger Anwendung Definieren von einem oder mehreren zusätzlichen dynamischen Objektattributen im Datenbanksystem durch das Archivsystem, sofern das Datenbanksystem diese nicht automatisch bei der ersten Wertzuweisung erstellt,
• Abfrage aller in dem Datenbanksystem befindlichen Objekte, bei denen der Wert / die Werte der einen oder mehreren zusätzlichen dynamischen Objektattribute leer ist / sind oder nicht mit dem Wert oder einem davon abgeleitetem Wert des korrespondierenden Objektattributs im Datenbanksystem übereinstimmt,
• Suchen und Finden der abgefragten Objekte im Archivsystem,
• Übernehmen der Objektattribute aus dem Datenbanksystem in das Arch ivsystem,
• Markieren des verarbeiteten Abfrageergebnisses im Datenbanksystem, indem der Wert der Objektattribute so wie er von der Abfrage zurückgegeben wurde oder ein davon abgeleiteter Wert in das jeweils korrespondierende zusätzliche dynamische Objektattribut des Datenbanksystems geschrieben wird.

2. Verfahren nach Anspruch 1, **dadurch gekennzeichnet, dass** nur ein zusätzliches dynamisches Objektattribut im Datenbanksystem generiert wird, welchem als Wert das Ergebnis einer Hashfunktion über die zu synchronisierenden Attribute durch das Archivsystem zugewiesen wird, und die Abfrage entsprechend das zusätzliche dynamische Objektattribut mit dem Ergebnis der Hashfunktion über die zu synchronisierenden Attribute vergleicht.

3. Verfahren nach Anspruch 1, **dadurch gekennzeichnet, dass** den pro zu synchronisierendem Attribut erstellten zusätzlichen dynamischen Attributen als Wert anstelle des Werts des korrespondierenden Attributs im Archivsystem jeweils das Ergebnis einer Hashfunktion über diese zugewiesen wird und die Abfrage entsprechend jeweils das zusätzliche dynamische Objektattribut mit dem Ergebnis der Hashfunktion über die korrespondierenden zu synchronisierenden Attribute vergleicht.

4. Verfahren nach einem der vorherigen Ansprüche, **dadurch gekennzeichnet, dass** die verwendete Hashfunktion zusätzliche Informationen wie beispielsweise die Seriennummer des Archivsystems, ein Geheimnis und/oder ein Token beinhaltet.

5. Verfahren nach einem der vorherigen Ansprüche, **dadurch gekennzeichnet, dass** die verwendete Hashfunktion um ein Salt erweitert wird, um eine Neusynchronisierung des Datenbanksystems auszulösen.

6. Verfahren nach einem der vorherigen Ansprüche, **dadurch gekennzeichnet, dass** das Archivsystem die Abfrage aller im Datenbanksystem befindlicher Objekte in Datenblöcke mit einer variablen Größe aufteilt.

7. Verfahren nach einem der vorherigen Ansprüche, **dadurch gekennzeichnet, dass** die bei der Abfrage gefundenen Objekte des Datenbanksystems inklusive ihrer Attribute in das Archivsystem geschrieben werden, falls diese noch nicht in diesem enthalten sind.

8. Verfahren nach einem der vorherigen Ansprüche, **dadurch gekennzeichnet, dass** das Archivsystem alle empfangenen Objekte beim Eingang gegen Veränderung schützt, indem es sie mit einer Signatur versieht oder von einem Zeitstempeldienst signieren lässt, wobei die synchronisierten, dynamischen Attribute von der Signierung ausgenommen sind.

9. Verfahren nach einem der vorherigen Ansprüche, **dadurch gekennzeichnet, dass** beim Zugriff von zwei oder mehreren Archivsystemen auf das gleiche Datenbanksystem die zusätzlichen dynamischen Objektattribute jeweils mit einem Bezeichner versehen werden, welcher spezifische Identifikationseigenschaften der jeweiligen Archivsysteme beinhaltet.

10. Verfahren nach einem der vorherigen Ansprüche, **dadurch gekennzeichnet, dass** das Datenbanksystem über ein zugangsgeschütztes Benutzerkonto pro Benutzer verfügt, auf welche separat zugegriffen werden kann.

11. Verfahren nach einem der vorherigen Ansprüche, **dadurch gekennzeichnet, dass** das Archivsystem über ein zugangsgeschütztes Administrationskonto oder eine besondere Vertrauensstellung verfügt, welches Zugriff auf alle Benutzerkonten des Datenbanksystems hat oder gewährt.

12. Verfahren nach Anspruch 10 oder 11, **dadurch gekennzeichnet, dass** das Archivsystem einen Verzeichnisdienst zur Auswahl bestimmter Konten verwendet.

13. Verfahren nach einem der vorherigen Ansprüche, **dadurch gekennzeichnet, dass** das zu synchronisierende dynamische Objektattribut ein Ordnername oder vollständiger Ordnerpfad ist.

14. Verfahren nach Anspruch 13, **dadurch gekennzeichnet, dass** die Objekte ordnerweise abgearbeitet werden indem das Archivsystem
- zunächst vom Datenbanksystem eine Auflistung der Ordner abfragt,
- jeweils den Hashwert aus dem vollständigen Ordnerpfad berechnet,
- anschließend für die Synchronisierung jeweils alle Objekte der Ordner des Datenbanksystems abfragt bei denen das zusätzliche dynamische Objektattribut leer ist oder nicht mit dem für diesen Ordner errechneten Hashwert übereinstimmt und
- nach Synchronisierung des Objektattributs die abgearbeiteten Abfrageergebnisse durch Schreiben des errechneten Hashwerts in das zusätzliche dynamische Objektattribut markiert.

15. Verfahren nach einem der vorherigen Ansprüche, **dadurch gekennzeichnet, dass** das Archivsystem basierend auf einem definierten Regelwerk in Abhängigkeit von dem Wert der synchronisierten Objektattribute weitere Aktionen auf dem Archivsystem und/oder dem Datenbanksystem durchführt.

16. Verfahren nach einem der vorherigen Ansprüche, **dadurch gekennzeichnet, dass** die Objekte Emails sind.

17. Computerprogramm zur Durchführung des Verfahrens nach einem der Ansprüche 1 bis 16 mit Programmcode, der auf einem maschinenlesbaren Träger gespeichert ist, wenn das Programm in einem Computer ausgeführt wird.

18. Verwendung des Verfahrens nach den Ansprüchen 1 bis 16 zur Synchronisierung eines Mailarchivs.

## Claims

1. A method for synchronizing dynamic attributes of objects in a database system with an archive system by means of using an additional dynamic attribute or one additional dynamic attribute per attribute to be synchronized, comprising at least the following steps:
• When used for the first time, the archive system is defining one or more additional dynamic object attributes in the database system, unless the database system automatically creates them when the first value is assigned,
• Querying all objects in the database system for which the value(s) of the one or more additional dynamic object attributes is/are empty or does/do not match the value or a thereof derived value of the corresponding object attribute in the database system,
• Searching and finding the queried objects in the archive system,
• Transfering the object attributes from the database system to the archive system,
• Marking the processed query result in the database system by writing the value of the object attributes as it was returned by the query or a value derived thereof into the respectively corresponding additional dynamic object attribute of the database system.

2. Method according to claim 1, **characterized in that** only one additional dynamic object attribute is generated in the database system, to which additional dynamic object attribute the result of a hash function over the attributes to be synchronized is assigned as value by the archive system, and the query accordingly compares the additional dynamic object attribute with the result of the hash function over the attributes to be synchronized.

3. Method according to claim 1, **characterized in that** the additional dynamic attributes created as per each attribute to be synchronized are assigned each as a value the result of a hash function of the corresponding attribute in the archive system instead of the value of the corresponding attribute in the archive system, and **in that** the query compares accordingly each additional dynamic object attribute with the result of the hash function of the corresponding attributes to be synchronized.

4. Method according to one of the previous claims, **characterized in that** the hash function used contains additional information such as the serial number of the archive system, a secret and/or a token.

5. Method according to one of the previous claims, **characterized in that** the hash function used is extended by a salt in order to trigger a resynchronization of the database system.

6. Method according to one of the previous claims, **characterized in that** the archive system divides the query of all objects located in the database system into data blocks with a variable size.

7. Method according to one of the previous claims, **characterized in that** the objects of the database system found during the query, including their attributes, are written into the archive system if they are not yet contained in it.

8. A method according to one of the previous claims, **characterized in that** the archive system protects all received objects against alteration upon receipt by providing them with a signature or having them signed by a time stamp service, wherein the synchronized, dynamic attributes are excluded from signing.

9. Method according to one of the previous claims, **characterized in that** when two or more archive systems access the same database system, the additional dynamic object attributes are each provided with an identifier containing specific identification properties of the respective archive systems.

10. Method according to one of the previous claims, **characterized in that** the database system has one access-protected user account per user, which can be accessed separately.

11. Method according to one of the previous claims, **characterized in that** the archive system has an access-protected administration account or a special trust position which has or grants access to all user accounts of the database system.

12. Method according to claim 10 or 11, **characterized in that** the archive system uses a directory service for selecting certain accounts.

13. Method according to one of the previous claims, **characterized in that** the dynamic object attribute to be synchronized is a folder name or full folder path.

14. Method according to claim 13, **characterized in that** the objects are processed folder by folder wherein the archive system
• first requests a list of the folders from the database system,
• calculates the respective hash value from the complete folder path,
• then, for synchronization, queries all objects of the folders of the database system for which the additional dynamic object attribute is empty or does not match the hash value calculated for this folder, and
• after synchronizing the object attribute,marks the processed query results by writing the calculated hash value into the additional dynamic object attribute.

15. Method according to one of the previous claims, **characterized in that** the archive system carries out further actions on the archive system and/or the database system based on a defined set of rules as a function of the value of the synchronized object attributes.

16. Method according to one of the previous claims, **characterized in that** the objects are emails.

17. Computer program for performing the method according to any one of claims 1 to 16 with program code which is stored on a machine-readable data carrier when the program is executed in a computer.

18. Use of the method according to claims 1 to 16 for synchronizing an email archive.

## Revendications

1. Procédé de synchronisation d'attributs dynamiques d'objets dans un système de base de données avec un système d'archivage par utilisant un attribut dynamique supplémentaire ou un attribut dynamique supplémentaire par attribut à synchroniser, comprenant au moins les étapes suivantes :
• Lorsqu'il est utilisé pour la première fois, le système d'archivage définit un ou plusieurs attributs d'objet dynamique supplémentaires dans le système de base de données, si le système de base de données ne les crée pas automatiquement lorsque la première valeur est attribuée,
• Interroger tous les objets du système de base de données pour lesquels la ou les valeurs d'un ou de plusieurs attributs d'objet dynamique supplémentaires sont vides ou ne correspondent pas à la valeur ou à une valeur dérivée de l'attribut d'objet correspondant dans le système de base de données,
• Rechercher et trouver les objets interrogés dans le système d'archivage,
• Transférer les attributs d'objet du système de base de données vers le système d'archivage,
• Sélectionner le résultat traité de la requête dans le système de base de données en écrivant la valeur des attributs de l'objet telle qu'elle a été renvoyée par la requête ou en écrivant une valeur y dérivée dans l'attribut objet dynamique supplémentaire correspondant du système de base de données.

2. Procédé selon la revendication 1, **caractérisé en ce qu'**un seul attribut d'objet dynamique supplémentaire est généré dans le système de base de données auquel le résultat d'une fonction de hachage sur les attributs à synchroniser est attribué comme valeur par le système d'archivage, et que la requête compare l'attribut d'objet dynamique supplémentaire correspondant au résultat de la fonction de hachage sur les attributs à synchroniser.

3. Procédé selon la revendication 1, **caractérisé en ce que** les attributs dynamiques supplémentaires créés pour chacun attribut à synchroniser reçoivent chacuns le résultat d'une fonction de hachage de l'attribut correspondant dans le système d'archivage à la place de la valeur de l'attribut correspondant dans le système d'archivage, et que la requête compare l'attribut objet dynamique supplémentaire avec le résultat de la fonction de hachage de ces attributs correspondants à synchroniser.

4. Procédé selon l'une des revendications précédentes, **caractérisé en ce que** la fonction de hachage utilisée contient des informations supplémentaires telles que le numéro de série du système d'archivage, un secret et/ou un signe.

5. Procédé selon l'une des revendications précédentes, **caractérisé en ce que** la fonction de hachage utilisée est étendue par un sel afin de déclencher une resynchronisation du système de base de données.

6. Procédé selon l'une des revendications précédentes, **caractérisé en ce que** le système d'archivage divise la requête de tous les objets situés dans le système de base de données en blocs de données de taille variable.

7. Procédé selon l'une des revendications précédentes, **caractérisé en ce que** les objets du système de base de données trouvés lors de la requête, y compris leurs attributs, sont écrits dans le système d'archivage s'ils ne sont pas encore contenus dans celui-ci.

8. Procédé selon l'une des revendications précédentes, **caractérisé en ce que** le système d'archivage protège tous les objets reçus contre toute altération lors de leur réception en leur fournissant une signature ou en les faisant signer par un service d'horodatage, où les attributs dynamiques synchronisés sont exclus de la signature.

9. Procédé selon l'une des revendications précédentes, **caractérisé en ce que**, lorsque deux ou plusieurs systèmes d'archivage accèdent au même système de base de données, les attributs d'objet dynamique supplémentaires sont munis chacun d'un identificateur qui contient les propriétés d'identification spécifiques des systèmes d'archivage respectifs.

10. Procédé selon l'une des revendications précédentes, **caractérisé en ce que** le système de base de données comporte un compte d'utilisateur protégé par accès par utilisateur, auquel on peut accéder séparément.

11. Procédé selon l'une des revendications précédentes, **caractérisé en ce que** le système d'archivage possède un compte d'administration à accès protégé ou une position de confiance spéciale qui possède ou donne accès à tous les comptes utilisateurs du système de base de données.

12. Procédé selon la revendication 10 ou 11, **caractérisé en ce que** le système d'archivage utilise un service de répertoire pour sélectionner certains comptes.

13. Procédé selon l'une des revendications précédentes, **caractérisé en ce que** l'attribut objet dynamique à synchroniser est un nom de dossier ou un chemin de dossier complet.

14. Procédé selon la revendication 13, **caractérisé en ce que** les objets sont traités de manière fichier-par-fichier et que le système d'archivage
• demand d'abord une liste des dossiers du système de base de données,
• calcule la valeur de hachage à partir du chemin complet du dossier,
• interroge ensuite tous les objets des dossiers du système de base de données pour la synchronisation dont lesquels l'attribut objet dynamique supplémentaire est vide ou ne correspond pas à la valeur de hachage calculée pour ce dossier, et
• après la synchronisation de l'attribut objet, marque les résultats de la requête traitée par écrivant la valeur de hachage calculée dans l'attribut objet dynamique supplémentaire.

15. Procédé selon l'une des revendications précédentes, **caractérisé en ce que** le système d'archivage effectue d'autres actions sur le système d'archivage et/ou le système de base de données sur la base d'un ensemble défini de règles en fonction de la valeur des attributs objet synchronisés.

16. Procédure selon l'une des revendications précédentes, **caractérisée en ce que** les objets sont des courriers électroniques .

17. Un logiciel pour exécuter la procédure en vertu de l'une des revendications 1 à 16 avec le code de programme étant stocké sur un support lisible par ordinateur lorsque le programme est exécuté dans un ordinateur.

18. Utilisation de la procédure selon les revendications 1 à 16 pour synchroniser une archive de courriers électroniques.
